# EUROPEAN PATENT APPLICATION

(11) **EP 2 211 526 A1**
(43) Date of publication of application: **28.07.2010**
(21) Application number: 09010000.9
(22) Date of filing: 03.08.2009
(51) Int. Cl.: H04L 29/08

(54) **Method for auto uploading files and related computer-readable medium**

(30) Priority: 21.01.2009 TW 98102221
(71) Applicant: ZyXEL communications Corp., Science Park Hsin chu (TW)
(72) Inventor: Lee, Pei-Hung, Hsinchu (TW); Lu, Yi-Ling, Hsinchu (TW)
(74) Representative: Zeitler - Volpert - Kandlbinder

(57) **Abstract**

The present invention provides a method for auto uploading files and a related computer-readable medium. The method of the present invention comprises: determining whether file variations occur in at least a folder of a first electronic device to generate a determining result; and executing an auto uploading operation to auto upload files resulting in the file variations occurring in the folder to a data storage space of at least a second electronic device when the determining result indicating that the file variations occur in the folder. The present invention can be utilized for auto uploading different types of files to different types of network sharing spaces such as YouTube, Flickr, Picasa, and File Transfer Protocol (FTP) server. Thus, the present invention can help users to save a lot of time in uploading files to the different types of network sharing spaces.

## Description

### BACKGROUND OF THE INVENTION

### 1. Field of the Invention

The present invention provide a method for auto file uploading, especially it can auto upload and a related computer-readable medium.

### 2. Description of Related Art

In an internet popular era, a lot of users desire to upload pictures or short video file to a public internet sharing spaces, for example, YouTube, Flickr, and Picasa, in order to be viewed and browsed by public. Evan though those websites has provided file uploading tool and program to user, but users have to download, install, and utilize every program, respectively. That means, users have to spend lots of time on different software's download, install, configure., and operate.

Consequently, because of the above limitation resulting from the technical design of prior art, the inventor strives via real world experience and academic research to develop the present invention, which can effectively improve the limitations described above.

### SUMMARY OF THE INVENTION

The object of the present invention is to provide an auto file uploading method to help user save a lot of time when upload files to various internet sharing spaces.

According to present invention claim, it is an auto file uploading method.

The present invention comprises a method which can verify whether a certain file has been changed or not in at least one folder of the first electronic device; if changed is occurred, the invention program will automatically run and upload the changed file to at least one of second electronic device storage.

According to present invention claim, it is a computer-readable medium which comprises couple of program's commands that can automatically file uploading. These commands comprise: To verify whether a certain file has been changed or not in at least one folder of the first electronic device and generated a verified report. According to the verified report, if the changed is occurred, the program will automatically execute and upload the changed file to at least one second electronic device storage.

The present invention can upload various types of files into different kind of internet sharing spaces, such as YouTube, Flickr, Picasa, and FTP (File Transfer Protocol) server. If the present invention apply to FTP server as the second electronic device, this present invention program will auto file uploading to, at least on one server, then the present invention program can auto file upload to various type of files, such as video files, image files, and documents to the data storage space of second device.

### BRIEF DESCRIPTION OF THE DRAWINGS

Figure. 1 and Figure. 2 are the diagrams to explore how to setup login account and password to access internet sharing space "Flickr" by present invention program.
Figure. 3 is the GUI (Graphic User Interface) of present invention program.
Figure. 4 is the flow chart of the auto file uploading method

### DETAILED DESCRIPTION OF PREFERRED EMBODIMENTS

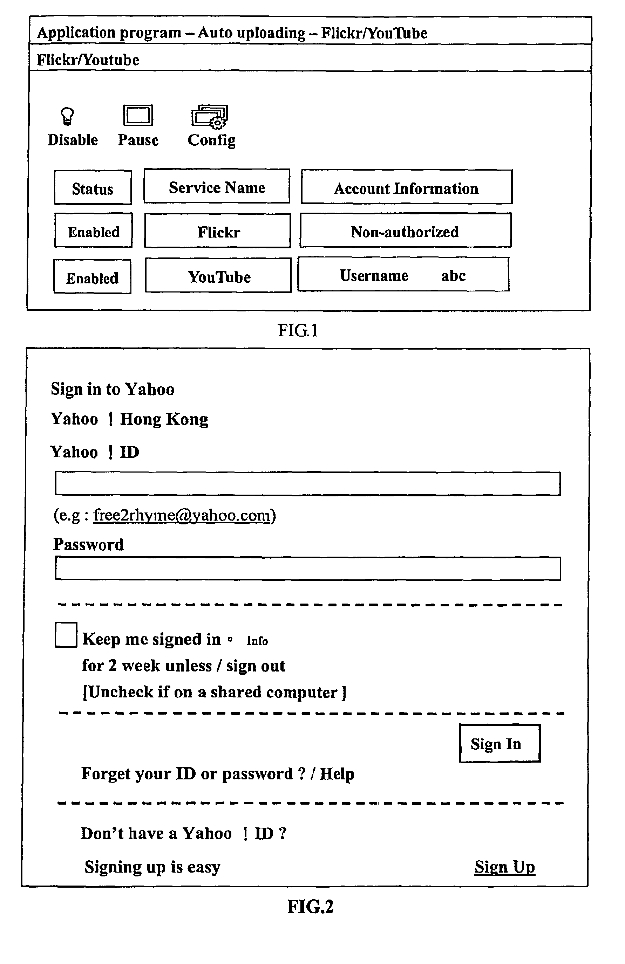

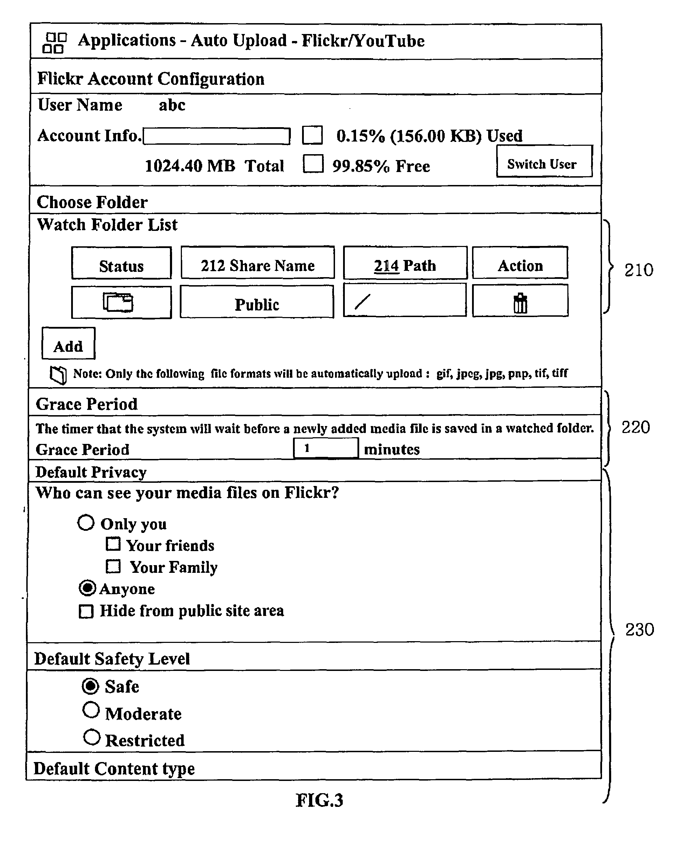

Please refer to Figs. 1 to 3. The present invention is an auto file uploading method and a related computer-readable medium, it comprises a plenty of commands in its program. For example, the present invention and computer-readable medium can upload file automatically from one computer to internet sharing spaces, or to a FTP server.

The implementation example of invention can be realized by a software product. The software product defines several function examples (comprises some method which described here), and could be comprised in various computer-readable medium. Regarding the definition of "computer-readable medium", it comprises but not limited to: A storage medium which can store re-writable information (for example, flash memory or any type of Solid NVM, or any kind of hard drive).

When such computer-readable medium has the capability to commands an operation in a computer by present invention, it belongs to the implementation example of the present invention. The other medium comprises communication media through a networking devices, such as a communication media which transmitted by a PC, telephony circuit network, or wireless network. The latter implementation example conveys information to internet and other network or other network node, or communicates from internet to other network. When this communication medium has the capability to commands an operation in a computer by present invention, it belongs to the implementation example of the present invention.

This menu will use an example to describe an image file in a portable storage device which will upload automatically to a network sharing space "Flickr". At the very beginning, a user will use the present invention program to setup a login account and password for network sharing space "Flickr" (see Figure..1 and Figure..2) in order to pass authentication to access "Flickr". Next, please refer to Figure..3 for the GUI (Graphical User Interface) chart of the present invention program. As Figure..3 shown, user can setup a watch folder list 210 which comprises a folder path 214 of folder 212 in portable storage device. Then, user can setup a grace period 220 (for example, 1 minute) and a preferred configuration 230.

Next, the present invention program will verify whether a file has been changed or not in folder 212 of portable storage device, the invention program will generate a verified report. The steps to confirm any file has been changed in folder 212 comprise as following: Read the folder path 214 under watch folder list 210. Based on the folder path 214, the invention program can detect any file event, at least one event, in folder 212 to verify any changed file occurred, which stored in portable storage device. While the file event is a new create file event, the verified result by invention program will indicate that there is a file changed in folder 212. Like the same, if the file event is a file changed event, the verified result will also indicate that there is a file changed in folder 212. The file changed events comprises file content changed event, file renamed event, or file copied event.

The present invention software will automatically execute a file uploading operation to internet sharing space "Flickr", when the verified result indicate the file has been changed in folder 212. The automatic file uploading operation will carry on after grace period ( for example 1 minute) is over. In addition, if folder 212 mapping to multiple internet sharing spaces (such as Flickr and YouTube), the auto file uploading operation will conduct based on the what the file types has changed, in folder 212. The changed file will upload to multiple mapping internet sharing spaces.

For example, the present invention program will automatically upload the video file to internet sharing space like website of "YouTube" and "Flickr." In addition, please pay attention, the above implementation is the only example description, but not restrict the claim of present invention. For instance, the invention software can apply to various types of computers and storage devices, and it shall not be confined in PC or mobile storage device.

In Figure.1∼3, these are partial examples of UI (User Interface), the present invention will be able to add the mapping UI according to second electronic device (such as ftp, Picasa...etc)

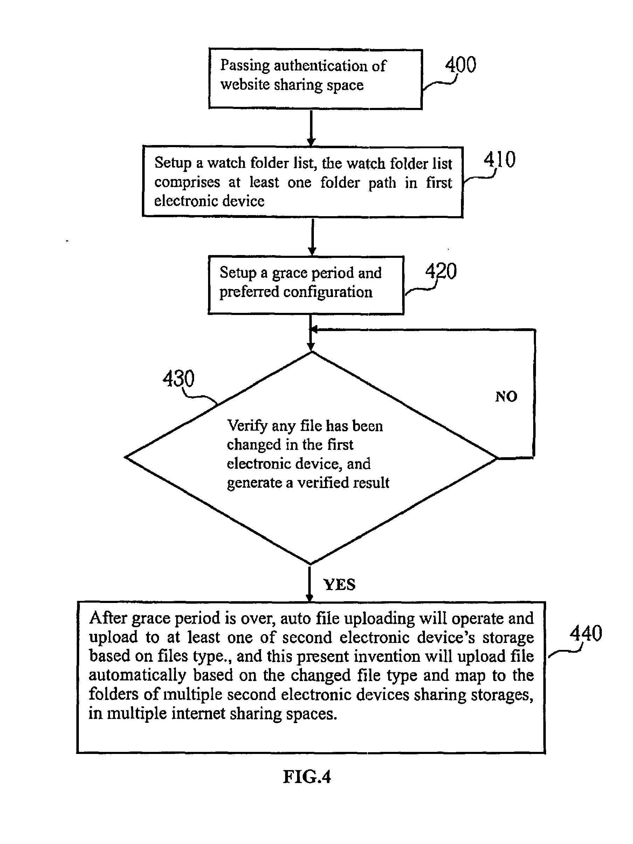

Please refer to Figure.4, it describes a flow chart of the present invention implementation example. If, in practical, can reach the same result, it's not a "must" to follow up the flow chart procedure as Figure. 4, and it's also not necessary to be consecutive; that is, these steps can insert other steps. The present invention method comprises following steps:
Step 400: Passing authentication to access internet sharing space.
Step 410: Setup a watching folder list, the list comprises at least one folder path of a folder in the first electronic device.
Step 420: Setup a grace period and a preferred configuration.
Step 430: To verify the file in first electronic devices whether has been changed or not and generate a verified result, according to the verified result, proceed step 440; While the verified result shows there is no change on file, go step 430.
Step 440: After grace period is over, auto file uploading will operate and upload to at least one of second electronic device's storage based on files type., and this present invention will upload file automatically based on the changed file type and map to the folders of multiple second electronic devices sharing storages, in multiple internet sharing spaces.

The present invention can apply different type of files uploading to different internet sharing space, such as YouTube, Flickr, Picasa, and FTP (File Transfer Protocol, FTP) server. If present invention applies to FTP server, the invention program will upload file automatically to at least one FTP server. At this time, there are various types of files can upload automatically, such as video file, image file, and text document. As a result, the present invention can save user a lot time to upload files to different internet sharing spaces.

While the present invention has been described in terms of what is presently considered to be the most practical and preferred embodiments, it is to be understood that the present invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. The method to upload file automatically, comprise:
To verify any changed file in at least one folder of first electronic device and then generate a verified report; if the verified report shows the file has changed, the program will automatically upload the changed file to at least one of second electronic device storage.

2. The method to upload file automatically according to claim 1, to verify the file has been changed or not in the first electronic device comprise:
Based upon at least one file event has occurred in this folder to verify that whether any file has been changed or not, in the first electronic device.

3. The method to upload file automatically according to claim 2, when file event verified as a new create file event, the verified report shows that this folder has a changed file.

4. The method to upload file automatically according to claim 2 , when file event verified as a file changed event, the result report shows that this folder has a changed file.

5. The method to upload file automatically according to claim 4, the file changed event comprises a file content changed event, a file renamed event, or a file copy event.

6. The method to upload file automatically according to claim 1, further comprises:
Setup a watch folder list, it comprise the folder path in the first electronic device;
To verify any file changed or not in the first electronic device, the step comprise :
Read folder path under watch-folder list and based on the path to detect at least file event to verify any file has been changed in this folder.

7. The method to upload file automatically according to claim 6, when the file event is a new create file event, the verified result has shown there is a file changed in this folder.

8. The method to upload file automatically according to claim 6, when the file event is a file changed event, the verified result has shown a file changed in this folder.

9. The method to upload file automatically according to claim 8, the file changed event comprise a file content changed event, a file renamed event, or file copy event.

10. The method to upload file automatically according claim 1, the second electronic device storage is a sharing space on internet.

11. The method to upload file automatically according claim 10, the folder mapping to multiple internet sharing spaces and automatically execute the file-uploading operation based upon file type of the changed file in a certain folder, in order to automatically execute the file uploading to a mapping folders on multiple internet sharing spaces

12. The method to upload file automatically according claim 1, the second electronic device is a server.

13. The method to upload file automatically according claim 1, the first electronic device is a storage device.

14. The method to upload file automatically according claim 1, further comprise:
Setup a grace period;
The automatically uploading operation will execute after a grace period, which confirmed by verified result that indicated a certain folder has a changed file.

15. A computer-readable medium, it comprises multiple program commands to automatically upload files, the multiple program commands comprise:
To verify the first electronic device whether any file has been changed at least in one folder and generate a verified result; when the verified result indicates there is a changed in file, the present invention program will automatically execute the file uploading operation to at least one second device's storage.

16. The computer-readable medium according to claim 15, the action to verify any changed file in the first electronic device comprises:
At least one file event to verify whether there is a file changed in the first electronic device.

17. The computer-readable medium according to claim 16, when the file event belongs to a new create file event, the verified result will indicate the folder contains a changed file.

18. The computer-readable medium according to claim 16, if this file event belongs to a file changed event, the verified result will indicate the folder contains a changed file.

19. The computer-readable medium according to claim 18, the file changed event comprises a file content changed event, a file rename event, or a file copy event.

20. The computer-readable medium according to claim 15 , the multiple program commands comprise:
Setup a watch folder list; it comprises the folder path of first electronic device;
The commands to verify any file has been changed in the first electronic device comprise:
Read folder path in watch folder list, based on the folder path to detect at least one file event to verify any file has been change in the first electronic device.

21. The computer-readable medium according to claim 20, when the file event is to a new create file event, the verified result will indicate the folder has a changed file.

22. The computer-readable medium according to claim 20, when the file event has identified as a file changed event, the verified report will indicate there is a file changed in this folder.

23. The computer-readable medium according to claim 22, when the file changed event comprise a file content changed event, one file rename event, or one file copy event.

24. The computer-readable medium according to claim 15, the data storage means an internet sharing space.

25. The computer-readable medium according to claim 24, while the folder mapping to multiple second electronic device of multiple internet sharing spaces , the file will upload automatically to multiple internet sharing spaces, based on file type.

26. The computer-readable medium according to claim 15, the second electronic device is a server.

27. The computer-readable medium according to claim 15, the first electronic device is a data storage hardware.

28. The computer-readable medium according to claim 15, the multiple program commands further comprise:
Setup a grace period;
The file uploading operation will automatically execute after both the verified result is positive (file has changed) and the grace period is over.
